Europäisches Patentamt

European Patent Office

Office européen des brevets

(19)

(11) **EP 0 887 928 A2**

(12) **EUROPÄISCHE PATENTANMELDUNG**

(43) Veröffentlichungstag:
30.12.1998 Patentblatt 1998/53

(51) Int. Cl.$^6$: **H03K 3/00**

(21) Anmeldenummer: 98106001.5

(22) Anmeldetag: 02.04.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **04.04.1997 DE 19713870**
**16.02.1998 DE 19806271**

(71) Anmelder:
**L-3 Communications ELAC Nautik GmbH**
**24118 Kiel (DE)**

(72) Erfinder: **Wieczorek, Frank**
**24106 Kiel (DE)**

(74) Vertreter:
**Rentzsch, Heinz, Dipl.-Ing.**
**Schönbornring 1**
**63263 Neu-Isenburg (DE)**

(54) **Elektronischer Funktionsgenerator und dessen Anwendung in Rückstrahl-Ortungsgeräten**

(57) Ein digitaler elektronischer Funktionsgenerator verwendet einen FIFO-Speicher, in den die Stützwerte der zu erzeugenden Funktion eingegeben werden. Der Empty-Ausgang (EF) des Speichers (D1) ist mit dessen Retransmit-Eingang (RT) verbunden, so daß jedes Leseendesignal (EF) ein erneutes Auslesen des Speichers auslöst. Hierdurch liefert der Speicher an seinen Signalausgängen (Q0 bis Q8) periodisch digitale Datenworte, welche die zu erzeugende Funktion darstellen und digital oder nach D/A-Umsetzung analog weiterverarbeitet, beispielsweise zum Ansteuern der Wandler einer Echolotanlage dienen können. Ein kombinierter Sendeimpuls- und Mischfrequenzgenerator für Echolotgeräte verwendet als Mischfrequenzgenerator (FHF) einen solchen asynchronen FIFO-Speicher und erzeugt zugleich den Betriebstakt (NFCLK) für eine Zustandsmaschine auf PROM-Basis, welche das Sendesignal (FNF) liefert.

Fig.12

**Beschreibung**

Die Erfindung befaßt sich mit arbiträren Funktionsgeneratoren, d.h. elektronischen Generatoren, welche elektrische Signale mit unterschiedlichen Zeitfunktionen erzeugen können. Solche Generatoren finden beispielsweise als Sendefunktionsgenerator in der Rückstrahl-Ortungstechnik Anwendung, können aber auch bei der Funktionsprüfung elektronischer Schaltungen und Geräte, bei der Ermittlung des Einschwing- und Zeitverhaltens solcher Schaltungen und Geräte sowie allgemein im Labor vielseitig eingesetzt werden. Bislang auf dem Markt von Herstellern elektronischer Meßgeräte angebotene Funktionsgeneratoren sind aufwendig und teuer. Aufgabe der Erfindung ist es folglich in erster Linie, einen arbiträren Funktionsgenerator zu schaffen, der aus herkömmlichen und erprobten elektronischen Baugruppen kostengünstig aufgebaut und darüber hinaus leicht auf unterschiedliche Funktionen umprogrammierbar ist.

Diese Aufgabe wird durch die im Anspruch 1 gekennzeichnete Erfindung gelöst. Sie macht sich bestimmte Eigenschaften bekannter FIFO-Speicherbausteine (First-In-First-Out), nämlich deren Retransmit-Funktion zunutze und verwendet einen solchen asynchronen FIFO-Speicher als funktionsbestimmendes Bauelement des Generators. Die Retransmit-Funktion asynchroner FIFO-Strukturen wird normalerweise nur bei einer fehlerhaften Blockübertragung in digitalen Systemen zum nochmaligen Datentransfer benutzt. Bei der Erfindung wird in den FIFO-Speicher mit Hilfe eines beliebigen Prozessors eine N-Bit digitalisierte gewünschte Funktionssequenz mit insgesamt P Stützstellen eingegeben. Abweichend von der normalen Speicheranwendung wird die Retransmit-Leitung periodisch benutzt, um stationäre oder auch gepulste Funktionen zu erzeugen. Als auslösendes Signal für die Retransmit-Operation dient das FIFO-typische Empty-Signal, welches nach dem vollständigen Auslesen des Speichers auftritt. Nach jedem kompletten Auslesen der programmierten Datensequenz durch insgesamt P Lesezyklen wird das Empty-Signal automatisch aktiviert und hieraus das Retransmit-Signal abgeleitet. Das Empty-Signal löst also immer wieder ein erneutes Auslesen des Speichers aus. Dieses repetierende Auslesen des FIFO-Speichers läßt die gewünschte periodische Signalfunktion am Speicherausgang entstehen.

Der Einsatz von FIFO-Speichern in Generatorschaltungen ist an sich bekannt. So zeigt die in Patent Abstracts of Japan, Sect.E, Bd. 17 (1993) unter Nr. 518 (E-1434) erörterte JP 5-13661 A eine Synchronisierschaltung für einen spannungsgesteuerten Oszillator, bei der ein einem Zähler vorgeschalteter FIFO-Speicher ein Halbbelegungssignal liefert, sobald die halbe Kapazität des FIFO-Speichers belegt ist. Dann wird der Zähler zurückgesetzt und liefert ein Steuersignal an eine die Frequenz des Oszillators beeinflussende Steuerschaltung. Ferner beschreibt die in Patent Abstracts of Japan, Sect.E, Bd. 14 (1990) unter Nr. 483 (E-993) erwähnte JP 2-1999914 A einen Impulsformer, bei dem unter Verwendung eines FIFO-Speichers in das Ausgangssignal eines Impulsgenerators wahlweise ein zusätzlicher Impuls eingefügt werden kann.

Die Erfindung erstreckt sich ferner auf die Anwendung eines solchen Funktionsgenerators mit FIFO-Speicher als Signalgenerator in Rückstrahl-Ortungsgeräten. Solche Geräte senden einen Impuls aus elektromagnetischen (Radar) oder Ultraschallwellen (Sonar) aus, der an einem Ziel reflektiert wird und als Echoimpuls zum Empfänger zurückkehrt. Der empfangenen echomodulierten Sendefrequenz FNF der Echoimpulse wird eine Mischfrequenz (Ortsfrequenz) FHF überlagert, um eine konstante Zwischenfrequenz FZF zu erzeugen, welche dann in einem ZF-Verstärker und nachfolgendem Demodulator weiterverarbeitet und beispielsweise zur Zielentfernungs-Anzeige ausgewertet wird. Reichweite und Bündelung der abgestrahlten Wellen hängen von deren Wellenlänge ab, weshalb man je nach Anwendungsfall mit unterschiedlichen Sendefrequenzen arbeitet, die bei Echolotgeräten üblicherweise zwischen 20 und 300kHz liegen. Um je nach Gewässertiefe und gewünschter Zielauflösung unterschiedliche Sendefrequenzen einsetzen zu können, ist es bekannt, ein Echolotgeräte mit zwei oder mehreren Paaren von Sendefrequenzgenerator/Mischfrequenzgenerator auszustatten oder die frequenzbestimmenden Bauteile der Generatoren umschaltbar auszubilden. Der Schaltungsaufwand ist in beiden Fällen beträchtlich.

Verwendet man den erfindungsgemäßen Funktionsgenerator in einem Rückstrahl-Ortungsgerät, insbesondere einem Echolotgerät, so wird in Weiterbildung der Erfindung in den asynchronen FIFO-Speicher wenigstens eine Periode des zu erzeugenden HF-Signals in Form mehrerer Stützwerte einprogrammiert, und das am Ende des Auslesens auftretende Empty-Signal wird an den Retransmit-Eingang des Speichers zurückgeführt, so daß dieser fortlaufend die einprogrammierte Signalfolge erzeugt. Der Speicher kann leicht auf eine gewünschte Frequenz programmiert bzw. umprogrammiert werden.

Bei einer solchen im Anspruch 19 gekennzeichneten Weiterbildung der Erfindung entsteht ein digital programmierbarer und somit leicht auf unterschiedliche Frequenzen ein- oder umstellbarer Signalgenerator, der außer einem HF-Signal FHF auch ein getrennt programmierbares Niederfrequenzsignal FNF erzeugen kann, wie es für Sendeimpulse in Echolotgeräten und dergleichen benötigt wird. Von Vorteil ist, daß HF-Signal und NF-Signal phasenstarr miteinander gekoppelt sind, so daß eine zuverlässige Überlagerung des als Ortsfrequenz dienenden HF-Signals mit den Echoimpulsen und damit eine störungsfreie Laufzeit- und Entfernungsmessung gewährleistet ist. Wegen der einfachen digitalen Programmierbarkeit beider Generatoren braucht der Gerätehersteller nur noch einen Generatortyp zu produziern und am Lager zu halten, der dann je nach Anwendungsfall und Kundenwunsch aufdie geforderte NF-Sendefrequenz und HF-Mischfrequenz programmiert wird. Es können auch beide Frequenzen, wie bei Radargeräten, im HF-Bereich liegen.

Vorteilhafte Ausgestaltungen und Weiterbildungen der Erfindung ergeben sieh aus den Unteransprüchen. Sie werden nachfolgend anhand mehrerer in den Zeichnungen wiedergegebener Ausführungsbeispiele erläutert. Darin zeigt:

| | |
|---|---|
| Fig. 1 | einen N = 9 Bit arbiträren Digitalsequenzgenerator; |
| Fig.2a bis 2c | die Zeitdiagramme der Empty- und Retransmit-Signale bei drei verschiedenen Arten der Erzeugung des Retransmit-Signals; |
| Fig.3 | einen N=9 Bit arbiträren Analogsignalgenerator; |
| Fig.4 | einen solchen Generator mit Frequenzvorteiler und PLL; |
| Fig.5 | einen Generator mit funktionaler Torschaltung; |
| Fig.6 | den Zeitverlauf des Generator-Ausgangssignals OUT und des Start-Stop-Signals R/S für die Ansteuerung des Generators; |
| Fig.7 | einen Generator mit funktionaler Torschaltung und übergeordnetem Pulseinheitenzähler M; |
| Fig.8 | einen zugehörigen Zeitverlauf der Signale OUT und R/S; |
| Fig.9 | einen Generator nach Fig.7 mit zusätzlichem Amplitudensteller: |
| Fig.10 | einen Funktionsgenerator zur Verwendung als Sendestrahl-Richtungsbildner für eine Echolotanlage; |
| Fig.11 | die Draufsicht auf die Schaltungsplatine eines arbiträren Funktionsgenerators gemäß der Erfindung etwa in Originalgröße; |
| Fig. 12 | die Struktur eines einkanaligen kombinierten HF/NF-Signalgenerators gemäß der Erfindung; |
| Fig. 13 | das NF-Sendesignal in Form zweier alternierender, nicht überlappender Impulsfolgen mit variablem Tastverhältnis zum Ansteuern einer Senderendstufe in Brückenschaltung; |
| Fig. 14 | die simultane, phasenstarre Erzeugung einer HF-Mischfrequenz von (455 + 28) 483 kHz sowie einer NF-Sendefrequnz von 28kHz; und |
| Fig. 15 | einen Zweifrequenz-Signalgenerator mit Kanälen A und B für zwei im Betrieb wählbare Lotfrequenzen mit zugehörigen Mischfrequenzen. |

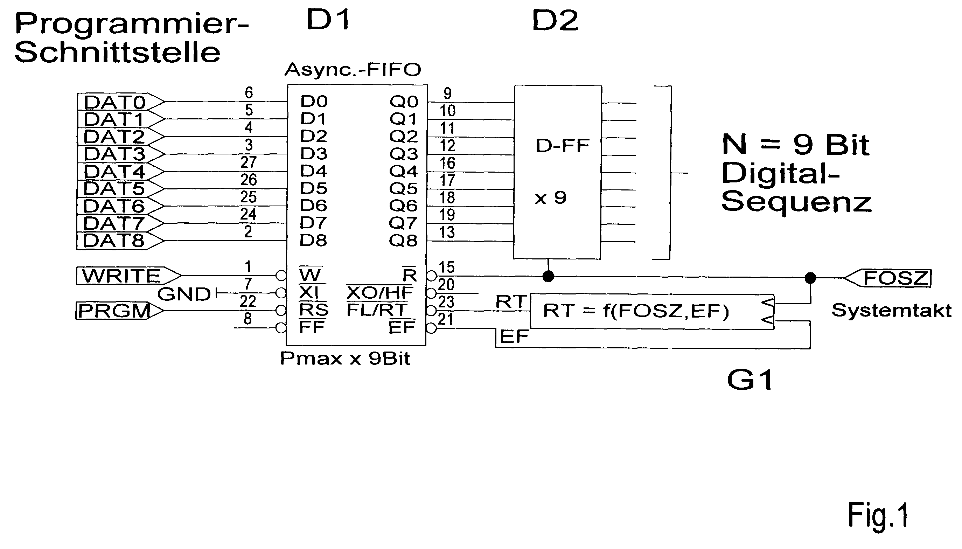

Bei dem in Fig. 1 gezeigten arbiträren Digitalsequenzgenerator mit N = 9 Bit wird der FIFO-Speicher D1, beispielsweise ein Baustein Typ CY7C464 der Firma CYPRESS, durch einen geeigneten Prozessor an den neun Eingängen D0 bis D8 mit einer 9-Bit breiten Digitalsequenz der Länge P programmiert. Dann erscheint an den neun Ausgängen Q0 bis Q8 beim ersten Lesezugriff das zuerst einprogrammierte Datenwort, danach das zweite usw. Nach genau (P-1) Lesezugriffen steht nur noch ein einziger Wert im FIFO, nämlich der zuletzt eingeschriebene. In Wirklichkeit befinden sich natürlich noch alle Einschreibdaten im FIFO und nur die Lesehinweisadresse wurde automatisch schrittweise fortgeschaltet. Andernfalls wäre keine Retransmit-Funktion möglich. Voraussetzung ist, daß nicht mehr Daten einprogrammiert wurden, als der maximalen FIFO-Speichertiefe $P_{max}$ entspricht. Damit die Bitsequenz für jeweils eine ganze Periode der Taktgeberfrequenz FOSZ stabil ist, muß die Sequenz verriegelt oder zwischengespeichert werden. Diesem Zweck dient das an die Ausgänge Q des FIFO D1 angeschlossene Vielfach-D-Flip-Flop D2. Anderfalls wäre der Ausgabebus am Ende der „0"-Phasejedes Lesezugriffs zwischenzeitig hochohmig. Unter obiger Voraussetzung

$$P \leq P_{max} \text{ [FIFO]} \tag{1}$$

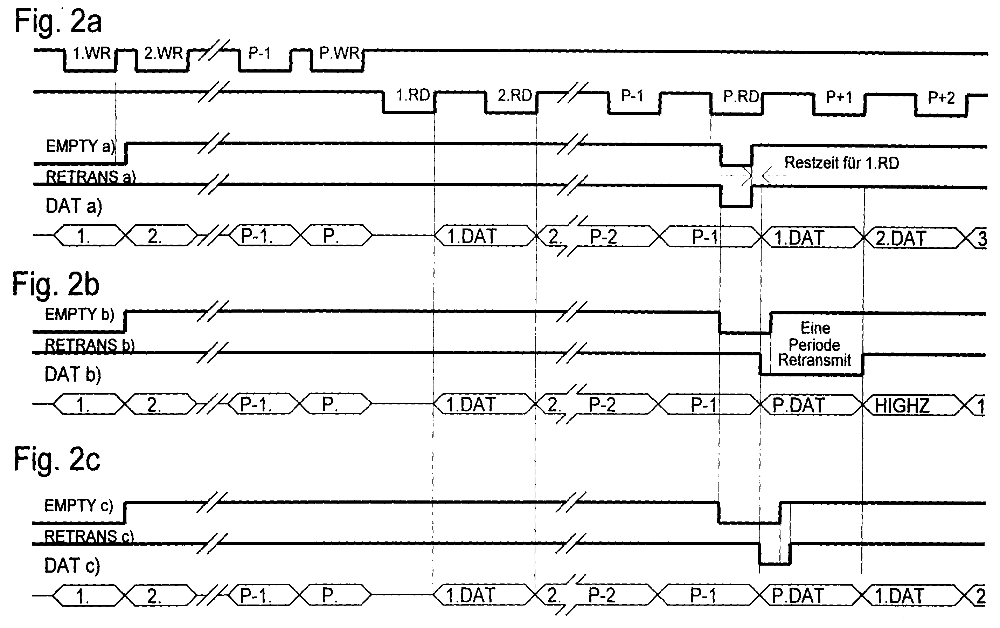

erscheint beim P-ten Auslesen am Ausgang EF das „0"-aktive Empty-Signal, welches zum Ansteuern des Retransmit-Eingangs RT benutzt werden soll. Dies kann auf drei verschiedene, in Fig.2 dargestellte Arten erfolgen. Dabei gelten die erste Signalzeile mit den Schreibzyklen WR und die zweite Signalzeile mit den Lesezyklen RD für alle drei Varianten. Die Taktgeberfequenz FOSZ liegt sowohl am Takteingang R des FIFO D1 als auch am Takteingang des Flip-Flops D2 an. Dieses hat eine der Anzahl der FIFO-Ausgänge entsprechende Anzahl von Speicherzellen.

Bei der ersten in Fig.2a gezeigten Sehaltungsvariante wird das Empty-Signal vom Ausgang EF unter Umgehung der Torschaltung G1 direkt an den Retransmit-Eingang RT gelegt. Es gilt also die logische Gleichung

RETRANSMIT = EMPTY.

Hierbei erscheint EMPTY = „0" unmittelbar nach Beginn des P-ten Lesezugriffs und löst sofort eine Retransmit-Funktion aus. Dies bedeutet, daß das letzte Datenwort nicht ausgegeben sondern die Lesehinweisadresse sofort asynchron zum ersten Datenwort zurückgesetzt wird. Somit werden von den P programmierten Datenworten nur die ersten (P-1) Werte (siehe Tabelle A) ausgegeben, und das letzte Datenwort erscheint nicht im Ausgabesignalstrom. Gleichwohl kann diese Art der Retransmit-Kopplung wohldefiniert benutzt werden. Der letzte Schreibtransfer stellt hierbei nur einen Leerzugriff (DUMMY) dar, und das letzte programmierte Datum erscheint nicht am Generatorausgang. Bei zeitkritischen Schaltungen mit Taktraten in der Größenordnung der maximalen FIFO-Zugriffsrate wird dieses Verfahren durch die asynchrone Retransmit-Operation eingeschränkt, weil diese Operation bis zur nächsten ansteigenden Flanke des Taktgebersignals FOSZ vollständig durchgeführt sein, das zugehörige erste Datenwort am FIFO-Ausgang anliegen und die Einstellzeit des verriegelnden D-Flip-Flop D2 eingehalten werden muß.

In der zweiten anhand von Fig.2b zu erläuternden Schaltungsvariante tritt die genannte Beschränkung nicht auf. Hier ist das Retransmit-Signal das in der Torschaltung G1 mit dem Systemtakt FOSZ verriegelte Empty-Signal, d.h. es gilt

RETRANSMIT: = EMPTY.

In diesem in Fig.2b dargestellten Fall gibt der FIFO-Speicher D1 nicht wie zuvor (Fig.2a) nur (P-1) sondern jetzt (P+1) Datenworte in das D-Flip-Flop D2 aus. Dabei werden zunächst exakt die P programmierten Datenworte ausgegeben, und anschließend wird ein zusätzlicher hochohmiger Takt durchlaufen. Das zwischengespeicherte Empty-Signal wird erst nach korrekter Ausgabe des letzten, d.h. des P-ten Wortes als Retransmit-Signal zum Eingang RT durchgeschaltet und bleibt dann eine ganze Taktperiode von FOSZ aktiv, so daß ausreichend Zeit zum internen Rücksetzen der Lesehinweisadresse verbleibt. Während dieses Zusatztaktes wird standardmäßig der FIFO-Ausgang deaktiviert, also hoehohmig geschaltet. Normalerweise wird die BUS-Leitung vom FIFO zum D-Flip-Flop zeitlich beschränkt freigegeben, so daß ein immer gleiches Datenwort (im allg. „11... 11" oder „00...00") stabil am Ausgang des FIFO anliegt und als zusätzlicher Zustand mit ausgegeben wird.

Diese Variante hat den Vorteil, zeitunkritisch die Retransmit-Operation bis zur maximalen Betriebsfrequenz des FIFOs ausführen zu können; jedoch muß der zusätzliche, nicht wahlfrei programmierbare Retransmit-Zustand von vornherein in der Datensequenz vorgesehen werden. Bei zyklischer Wiederholung der (P+1) Werte (s.Tabelle A) müssen die arbiträr programmierten P Werte dergestalt sein, daß sich der Retransmit-Wert lückenlos zwischen dem P-ten und dem ersten Wert einfügt. Diese Bedingung läßt sich bei vielen praktischen Anwendungen ohne weiteres erfüllen.

Nunmehr soll anhand von Fig.2c eine dritte Variante der Erzeugung des Retransmit-Signals beschrieben werden. Sie ermöglicht die exakte Ausgabe der P programmierten Datenworte (s.Tabelle A), ohne einen zusätzlichen Zustand oder eine reduzierte Anzahl von Datenworten zu liefern. Das Retransmit-Signal wird hier aus dem Empty-Signal EF und dem Lesetakt FOSZ kombinatorisch nach der Beziehung

RETRANSMIT / = /EMPTY & FOSZ

erzeugt. Hierfür empfängt die Torschaltung G1, wie Fig. 1 zeigt, außer dem Empty-Signal auch den Systemtakt FOSZ. Dadurch wird der P-te Lesezugriff beim Auslesen des letzten programmierten Datenwortes vollständig abgearbeitet und dieses Datenwort verriegelt, obwohl das Empty-Signal inzwischen bereits auf „0" geschaltet ist (vgl.Fig.2c). Der Taktsignalzustand „0" blockiert die Retransmit-Operation solange, bis der aktuelle Lesezyklus beendet ist. Erst danach wird durch FOSZ = „1" die Retransmit-Funktion während der normalen Lesepause sofort initialisiert, so daß zu Beginn des nächsten Lesezugriffs (FOSZ = „0") die interne Lesehinweisadresse wieder auf das erste programmierte Datenwort zeigt. Da jedem FIFO-Speicher ohnehin eine minimale Lesepause zugestanden werden muß, kann die Retransmit-Operation während dieser Pause ablaufen.

Die nachfolgende Tabelle A zeigt die Anzahl der Datenworte bei Programmierung einer Sequenz mit P Worten:

|  | a) RT = EF | b) RT : = EF | c) RT/ = / EF & Fosz |
|---|---|---|---|
| programmiert | P | P | P |
| ausgegeben | P-1 | P+1 | P |

Wie man sieht gibt nur die Variante c) die richtige programmierte Anzahl von Datenworten oder Zuständen aus und läßt die völlige Wahlfreiheit der Programmierung arbiträrer Funktionen zu. Daher werden nachfolgend nur diese in Fig. 1 gezeigte Variante und ihre weiteren Ausgestaltungen erläutert.

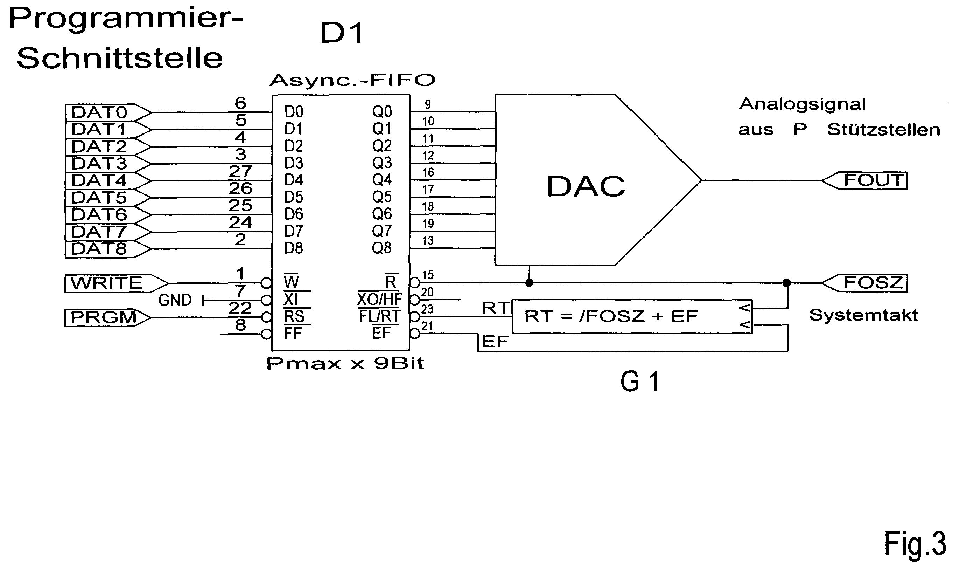

Um aus den zyklisch ausgegebenen digitalen N-Bit Wortsequenzen analoge Signale abzuleiten, muß entweder anstelle des D-Flip-Flops von Fig. 1 entsprechend Fig.3 ein Digital/Analog-Umsetzer DAC vorgesehen oder am Ausgang des D-Flip-Flops ein R2R-Kettenleiternetzwerk angeschlossen werden. Sollen beide Signalformen digital und analog verfügbar sein, bietet die Kettenleiter-Lösung eine Bauteilersparnis, weil die FIFO-Daten in jedem Fall verriegelt werden müsen. Fig.3 zeigt einen arbiträr programmierbaren Analogsignalgenerator mit N = 9 Bit und einem D/A-Umsetzer DAC, dessen neun Eingange an die neun Ausgänge Q0 bis Q8 des FIFO-Speichers D1 angeschlossen sind Außerdem erhält der D/A-Umsetzer die Taktfrequent FOSZ und liefert an seinem Ausgang das analoge Ausgangssignal FOUT. Ansonsten stimmt die Schaltung mit Fig. 1 überein.

Mit einem solchen Funktionsgenerator kann bei fester Systemfrequenz FOSZ die Frequenz FOUT des gelieferten Analogsignals zunächst nur durch Variation der programmierten Stützstellentiefe eingestellt werden. Für ein FIFO mit großen $P_{max}$ (2048 oder mehr) kann man mit großen Werten von $P \leq P_{max}$ relativ feine Frequenzschritte realisieren. Für kleine Werte von P hingegen werden die Schritte zu grobstufig. Man stellt deshalb dem Generator eine veränderbare Taktfrequenz FOSZ zu Verfügung, so daß die sich ergebende Periodedauer des Ausgangssignals nunmehr durch FOSZ und P optimiert werden kann. Grundsätzlich sollte man allerdings auch bei festem Systemtakt FOSZ die maximale Stützstellentiefe des FIFOs möglichst gut ausnutzen. Wenn bei fester FOSZ nur wenige Stützstellen benutzt werden, wobei die zur Frequenz FOUT des Ausgabesignals ideale Stützstellenzahl klein und keine ganze Zahl ist, wird die maximale Anzahl von Z ganzen Perioden der gewünschten Frequenz in die verfügbare Speichertiefe programmiert, damit die Frequenzauflösung so groß wie möglich wird. Die tatsächliche Ausgangsfrequenz FOUT ergibt sich dann zu

$$FOUT = FOSZ \cdot Z/P \tag{2}$$

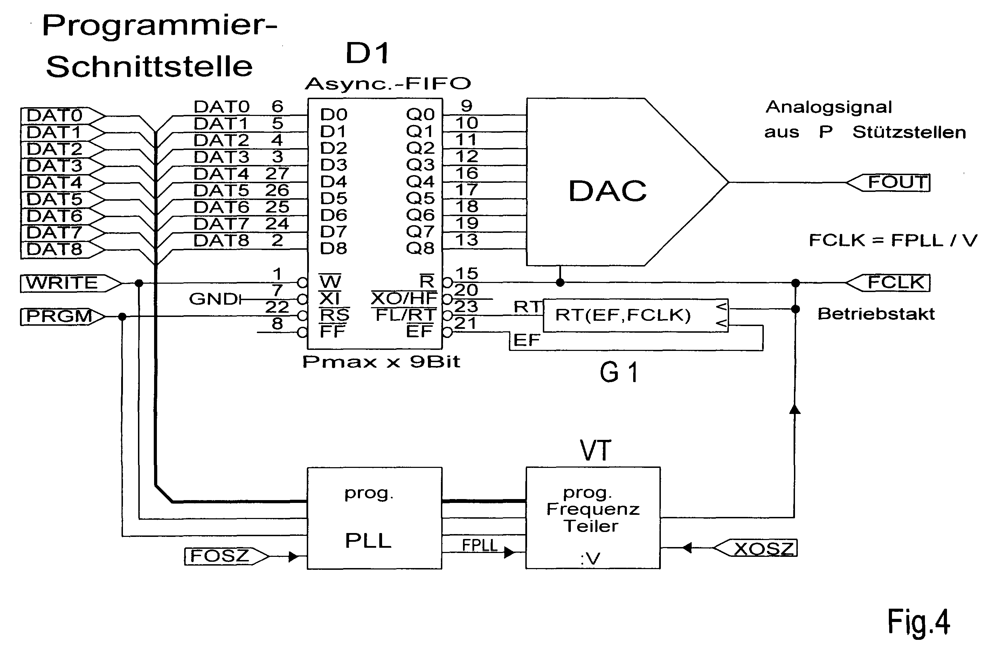

Wenn man nun die Taktfrequenz FOSZ selbst, wie Fig.4 zeigt, durch Einsatz einer digital programmierbaren Phasenverriegelungsschleife PLL über einen großen Frequenzbereich ändern kann, werden die Auflösung von FOUT sowie der insgesamt überstrichene Arbeitsbereich entspechend verbessert. Lediglich extrem niedrige Ausgabefrequenzen lassen sich auf diese Weise derzeit noch schlecht erzeugen, weil alle jetzt verfügbaren PLLs als minimale typische Ausgabefrequenz 1MHz haben.

Nach einer weiteren Ausgestaltung der Erfindung wird deshalb im arbiträren Generator ein zusätzlicher, frei programmierbarer Frequenzvorteiler VT mit einem Vorteilerfaktor V implementiert, wie dies in Fig.4 dargestellt ist. Der Frequenzvorteiler ist eingangsseitig an den PLL-Takt FPLL angeschlossen und liefert am Ausgang an den Systemtakt FCLK. PLL und VT stehen mit den Dateneingängen D0 bis D8 des FIFO-Speichers D1 in Verbindung. Zum Programmieren der PLL-Schaltung und/oder des Frequenzvorteilers sind beide an den Programmiereingang PRGM angeschlossen. Ansonsten stimmt die Schaltung nach Fig.4 mit Fig.3 bzw. Fig.1 überein. Gelingt es, einen Vorteilerfaktor V in der Größenordnung von 1000 zu realisieren, so sind nach G1.3 mit Z = 1 Ausgangsfrequenzen FOUT< 1 Hz bereits mit 1K-FIFO-Strukturen erzeugbar, selbst wenn $FPLL_{min}$, wie oben erwähnt, 1 MHz beträgt.

$$FOUT = (FPLL \cdot Z)/(P \cdot V) \tag{3};$$

$$FOUT = (FOSZ \cdot Z)/(P \cdot V) \tag{3a}$$

Mit einem durchaus gängigen Vorteilerfaktor V = 1024 läßt sich der Frequenzbereich um drei Zehnerpotenzen erweitern. Dabei ist FOSZ nicht starr sondern kann beispielsweise im Bereich von 780kHz bis zu einer maximalen Betriebsfrequenz von 66 MHz in feinsten Schritten verändert werden. Die PLL-Option verfeinert das realisierbare Frequenzraster derart, daß für einen großen Frequenzbereich die Frequenzabweichung praktisch Null ist. Sie bewirkt ferner eine nochmalige Steigerung des insgesamt abgedeckten Ausgangsfrequenzbereichs, welcher bei $P_{max}$ = 32768 mit

$$lg [(FOSZ_{max}/2 : FOSZ_{min}/(P_{max} \cdot 1024))] = 1g [66MHz/2 : (780kHz(32768 \cdot 1024))] = 9,15$$

ungefähr 9 Zehnerpotenzen überstreicht.

Benutzt man statt der PLL-Schaltung nur einen Mutterquarz mit FOSZ, so gilt G1.3a. Legt man den Generator zusätzlich für einen extern einspeisbaren Betriebstakt XOSZ aus so kann jede beliebig kleine Frequenz entsprechend G1.3a mit XOSZ anstelle von FOSZ erzeugt werden. Der Betriebstakt FCLK liegt außerdem, wie in Fig. 1 und 3, am Takteingang R des FIFO-Speichers sowie an der Torschaltung G1.

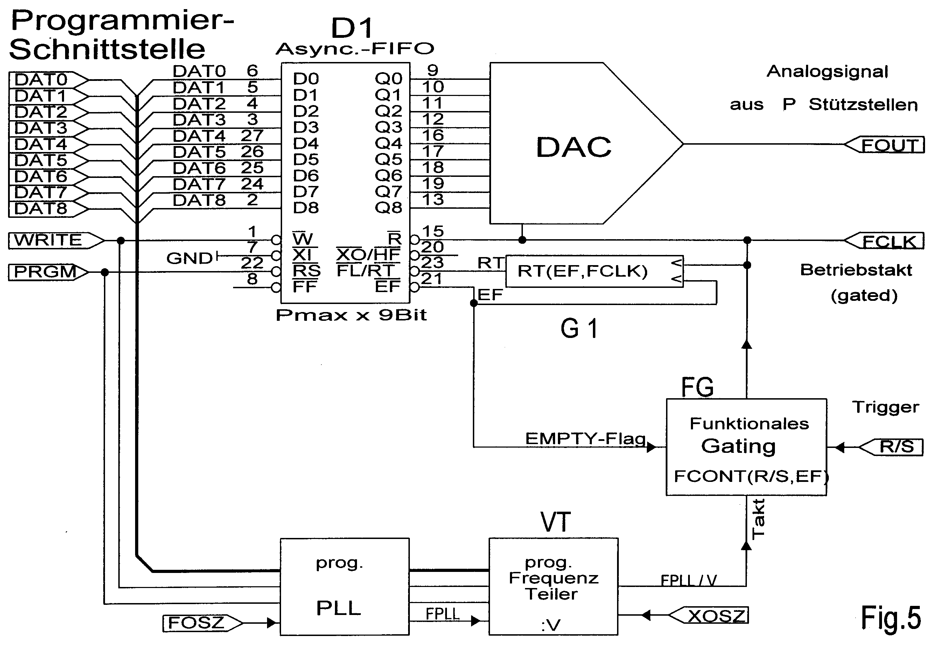

Bisher wurde nur der stationäre Dauerstrichbetrieb des Generators beschrieben. Er bietet aber auch die Möglichkeit, jede arbiträr programmierte Funktion wohldefiniert bis zu ihrem funktionalen Ende ablaufen zu lassen ehe der Generator deaktiviert wird. Man bezeichnet das als funktionales Gating oder funktionale Abschaltung. Eine solche Weiterbildung zeigt die Ausführungsform nach Fig.5. Der Generator wird hier durch ein externes Signal R/S bei „1" sofort gestartet und bei „0" (gewünschte Stillsetzung) nicht sofort, sondern über die Torschaltung FG erst am funktionalen Ende der gerade programmierten Sequenz, d.h. nach dem Auslesen der P-ten Stützstelle angehalten.

Die funktionale Torschaltung FG hat drei Eingänge, denen das Abschaltsignal R/S, das Empty-Signal EF sowie der Systemtakt zugeführt werden. Der Ausgang FCLK dieser Torschaltung FG liefert jetzt den freigeschalteten Systemtakt..

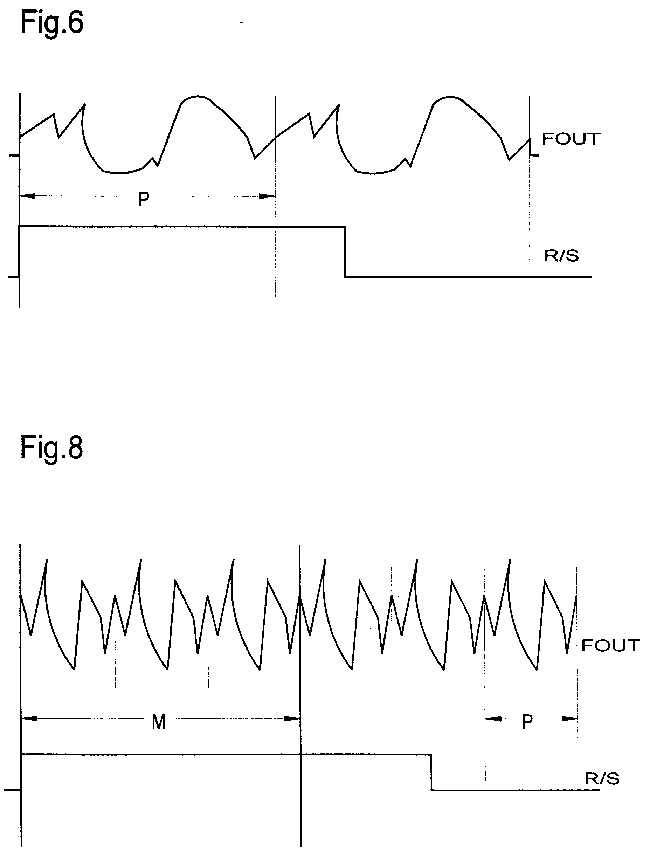

Man könnte diese funktionale Verknüpfung mit der Torschaltung FG durch sofortiges Abschalten des Betriebstaktes umgehen, was jedoch bei arbiträr programmierten Pulsfunktionen kaum sinnvoll ist. Für die Anwendung der Erfindung in Echolotgeräten werden beispielsweise Sendepulspakete mit zeitlich begrenzter Impulslänge und vorgegebener Sendeimpuls-Kernfrequenz FOUT benötigt. Der Echolotprozessor erzeugt das Sendertriggersignal R/S, dessen Aktivierungsdauer mit einem Deaktivierungs-Signalübergang „1=> 0" zeitlich irgendwo innerhalb der letzten Funktionssequenz enden kann. Diese vereinfachte Ansteuerung über eine funktionale Torschaltung FG ergibt sich aus dem Zeitdiagramm nach Fig.6. Die dort dargestellte funktionale Abschaltung des Ausgangssignals FOUT gewährleistet bei geringen zeitlichen Anforderungen an das Abschaltsignal R/S, daß das erzeugte Pulspaket immer definiert zu Ende gebracht wird. Die maximal mögliche Länge des Pulspakets wird zunächst direkt durch die aktuell programmierte Anzahl arbiträrer Stützstellen definiert, ist also durch die maximale Speichertiefe $P_{max}$ des eingesetzten FIFO-Speichers beschränkt.

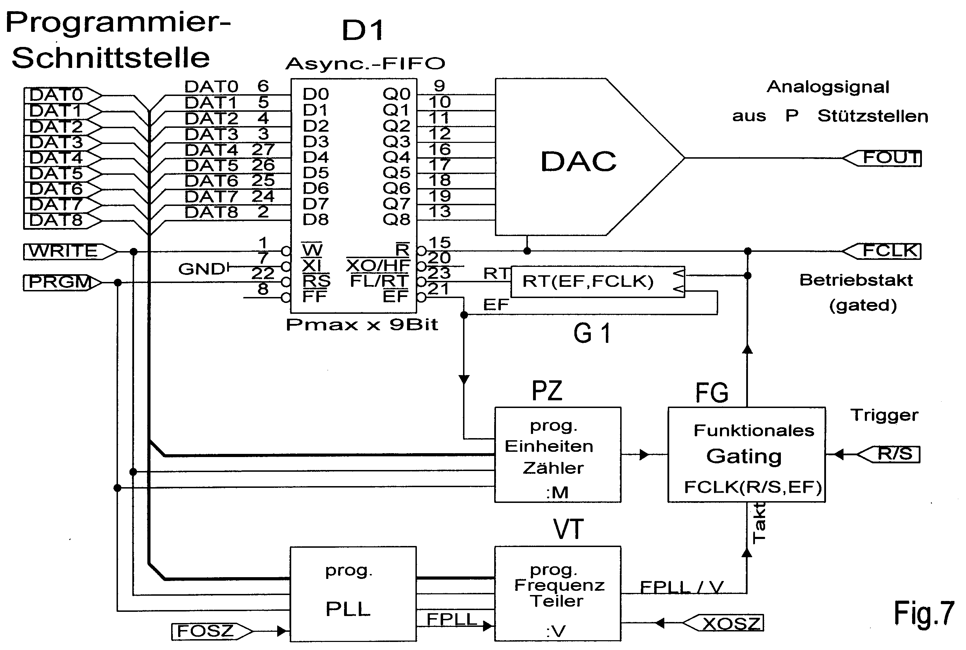

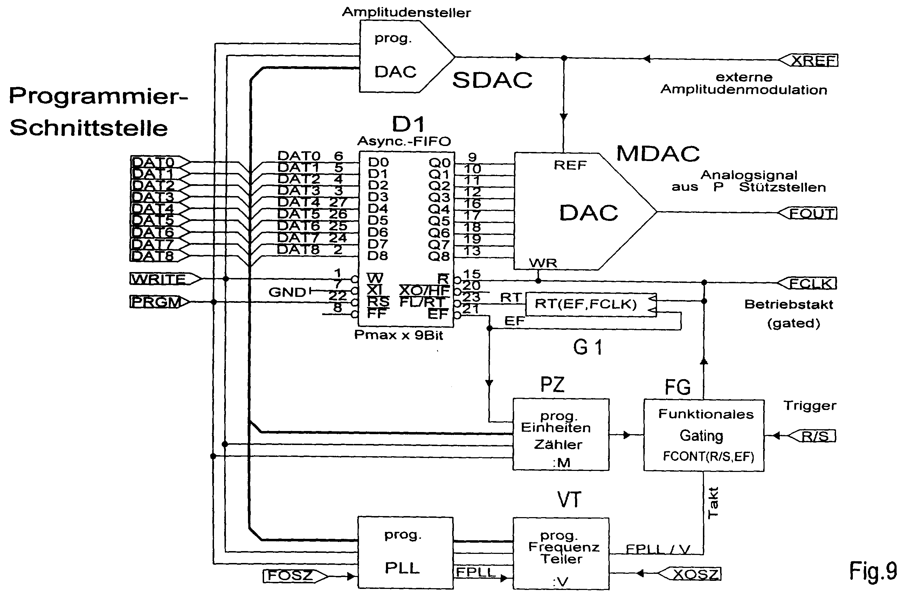

In der Echolottechnik und auch bei vielen anderen Anwendungsmöglichkeiten für den neuen Funktionsgenerator haben zeitbegrenzte Pulspakete innerhalb eines Gesamtpakets vielfach einen konstanten z.B. sinusförmigen Kurvenverlauf. Um dies zu erreichen, kann im Generator ein frei programmierbarer übergeordneter Pulseinheitenzähler PZ vorgesehen werden, den Fig.7 erkennen läßt. Er zählt M aufeinander folgende Pulspakete DURCH Abzählen der auftretenden EF = 0 Signale ab und faßt diese zu einem übergeordneten Impulsblock M zusammen (vgl. Fig.8). Erst am Ende eines solchen Impulsblocks M wird ein gewünschtes Ende des Sendeimpulses, angezeigt durch einen Signalübergang R/S => „0", durch funktionale Abschaltung über eine funktionale Torschaltung FG bewirkt. Somit kann die effektive Länge einer Impulseinheit um den Pulseinheitentaktor M gesteigert werden. Die zeitliche Dauer TPB eines solchen Impulsblocks ergibt sich dann zu

$$TPB = (P \cdot V \cdot M) / FPLL \qquad (4)$$

Bei Verwendung eines Oszillatortaktes FOSZ anstelle einer programmierbaren PLL gilt demnach GL.4 mit FOSZ statt FPLL. Die Schaltung nach Fig.7 erlaubt es, mit zeitlich sehr einfach zu erzeugenden Triggersignalen R/S auch relativ lange Pulspakete M mit vorgebener Pulslänge P exakt zu erzeugen; in Fig.8 ist M = 3. Die Impulsblockdauer TBP beträgt nach G1.4 jeweils P x M Taktimpulsperioden. Dies ergibt mit P = $P_{max}$ = 32768 bei FPLL = 66MHz mit M = 256 ud V = 1024 eine Impulsblockdauer von 130sec und bei FPLL = 780kHz eine Dauer von 11013sec.

Der programmierbare Pulseinheitenzähler PZ ist mit seinen Eingängen an die funktionale Torschaltung FG und das Emptysignal EF angeschlossen. Seine Ausgänge stehen mit den Dateneingängen D0 bis D8 des FIFO-Speichers in Verbindung. Zum Programmieren des Wertes M sind die Programmierleitung PRGM und die Schreibleitung WRITE sowie der parallele Datenbus angeschlossen.

Mit den bisher beschriebenen Generatorschaltungen kann die Ausgangsamplitude nur durch Variation der digitalen Stützstellenwerte beeinflußt werden. Dies bedeutet, daß für kleinere Amplituden die Signalauflösung (relative Bitquantisierung) prozentual entsprechend abnimmt. Soll die Amplitudenquantisierung für alle Pegelbereiche konstant sein, muß am Generatorausgang, wie Fig.9 zeigt, ein multiplizierender D/A-Umsetzer MDAC verwendet werden. Dessen Referenzspannung wird durch einen als Amplitudensteller arbeitenden langsamen Stell- D/A-Umsetzer SDAC oder durch eine Verriegelungsschaltung in Verbindung mit einem R-2R-Kettenleiternetzwerk erzeugt. Zusätzlich ist in Fig.9 ein externer Referenzspannungs-Eingang XREF vorgesehen, welcher immer dann benutzt werden kann, wenn der interne Referenz-D/A-Umsetzer MDAC hochohmig geschaltet wird oder wenn XREF und MDAC mittels eines Summierpunkts überlagert werden. Der Stell-DAC SDAC ist mit seinen Dateneingängen an den Programmierdatenbus des FIFO-Speichers angeschlossen. Der Ausgang des SDAC liegt am Bezugsspannungseingang REF des multiplizierenden D/A-Umsetzers MDAC. Diesem Eingang REF kann ferner ein externes Bezugssignal XREF zugeführt werden.

Die Auflösung des Amplitudenstell-DACs SDAC kann eine völlig andere sein als die des eigentlichen Generator-DACs MDAC. In Fig.9 wird als Beispiel jedoch dieselbe Bitquantisierung N benutzt. Bei Verwendung des externen Referenzeingangs XREF kann man zum einen durch Anlegen einer Gleichspannung die gewünschte Maximalamplitude festlegen. Darüber hinaus ist eine direkte Amplitudenmodulation bis zum maximalen Betriebsfrequenzbereich der Schaltung möglich. Damit können je nach den aktuellen Frequenzverhältnissen arbiträr erzeugte Trägerschwingungen eine Amplitudeninformation erhalten oder umgekehrt extern eingespeiste Träger arbiträr moduliert werden. Der programmierbare Amplitudenstell-DAC erlaubt bei konstanter Signaläuflösung mit 8 Bit beispielsweise eine Amplitudenvariation A von A = 0, 1, 2,......126, 255. Diese 256 interaktiv programmierbaren Einstellungen (ca.30dB) können z.B. einen programmierbaren Dynamikbereich von 0V....5V für den maximalen Ausgangssignalwert liefern.

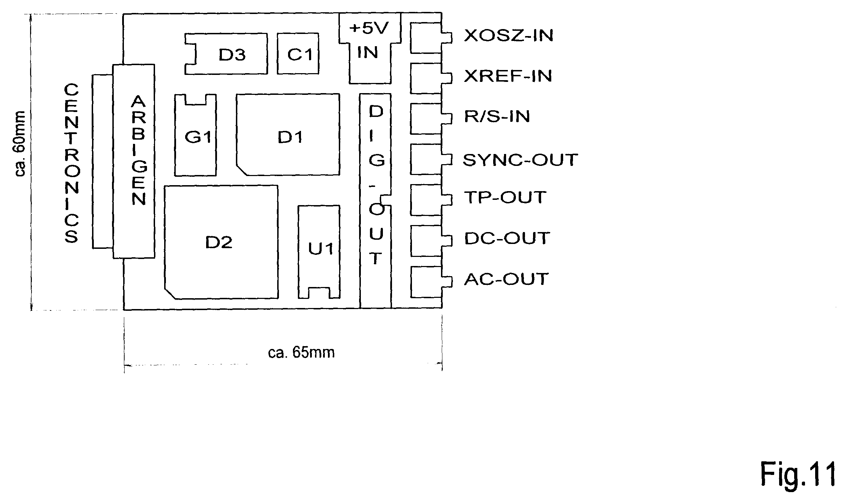

Das Programmieren des neuen Funktionsgenerators kann von jedem beliebigen Prozessor mit paralleler BUS-Struktur erfolgen, wobei nur eine einzige Adresse des Prozessor-RAMs belegt wird. Die in Fig.11 schematisch dargestellte Konfiguration wird beispielsweise direkt von einem PC aus über dessen CENTRONICS-Schnittstelle programmiert. Als einzige Adresse wird die des verwendeten Parallel-PORTs und des zugehörigen PC-Controlregisters bedient. Für die Programmiersequenz wird ein festes Programmierformat definiert. Nach Auslösen des Rücksetzsignals wird der Funktionsgenerator automatisch in den Programmiermodus geschaltet. Er erwartet nun eine Reihe von Bytetransfers, mit denen zum einen die Systemparameter (Vorteilerfaktor V, Pulspaketfaktor M, Amplitudenparameter A und PLL-Parameter) eingegeben werden und zum anderen, falls erwünscht, eine Neu/Umprogrammierung der Funktionssequenz durchgeführt wird. Der Bytetransfer wird also in eine Steuersequenz und eine anschließende Funktionssequenz unterteilt. In der Steuersequenz wird auch die Information mit übertragen, ob die z.Zt. im Generator programmierte Funktion umprogrammiert werden soll oder nicht. Ist dies nicht der Fall und werden also nur die Betriebsparameter geändert, so wird lediglich eine kurze Steuersequenz von beispielsweise 3 Bytes übertragen. Danach kann der Generator mit den neuen Betriebsparametern sofort die bereits programmierte Funktion mit numehr geänderten Parametern liefern.

Soll dagegen eine Umprogrammierung der Funktion erfolgen, so schließt sich an die Steuersequenz eine Anzahl $P \leq P_{max}$ von Funktionssequenz-Bytes und parallel die gewählte Synchronisationssequenz an. Hierzu zweigt die Hardware Bit 8 ab, welches dann als eigensrändiges Signal SYNC-OUT ausgegeben wird. Die Funktionsquantisierung arbeitet dann entsprechend nur noch mit (N-1) Bits. Das Ende wird durch das Freigeben des während der Programmierung abgeschalteten Taktgebers festgelegt. Ein weiterer Programmiermodus hängt an eine bereits programmierte Funktionssequenz eine weitere Funktionsfolge an, ohne daß die alte Funktion neu programmiert werden muß.

Da alle Betriebsparameter und die gesamte Funktionssequenz im Generator gespeichert sind, wird während seiner Nutzung keinerlei Rechenzeit benötigt. Der Generator kann nach dem Programmieren vom PC entfernt werden; nur die Spannungsversorgung muß verfügbar sein. Er kann eigenständig oder extern getriggert beliebig lange laufen. Wird kein R/S-Signal angelegt, läuft er im Dauerstrichbetrieb.

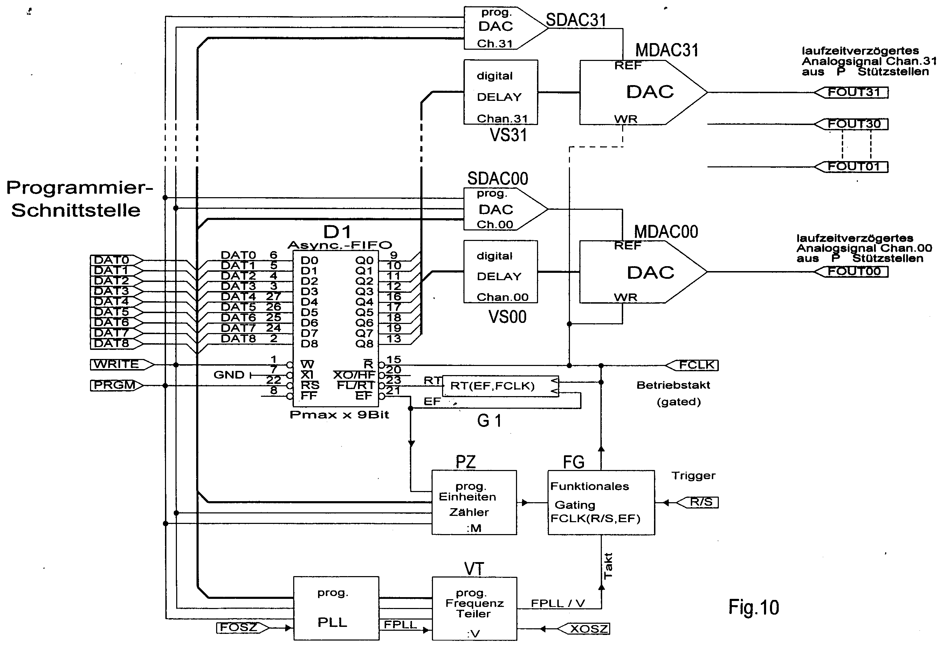

In Fig.10 ist die Anwendung des anhand von Fig.9 beschriebenen Funktionsgenerators in einem Sendestrahl-Richtungsbildner einer Echolotanlage dargestellt. Der beschriebene Generator speist hier eine Bank von 32 unabhängigen Beamformer-Laufzeitketten mit Digitalsequenzen. Die D/A-Umsetzung findet anschließend in allen 32 Kanälen für die 32 elektroakustischen Wandler statt. Zwischen die Bank von D/A-Umsetzern DAC00 bis DAC31 und die Signalausgänge Q0 bis Q8 des FIFO-Speichers D1 ist für jeden Kanal 00 bis 31 eine digitale Verzögerungsschaltung VS eingeschaltet. Der Funktionsgenerator kann über eine CENTRONICS-Schnittstelle oder über einen beliebigen byteorientierten Datenbus frei programmiert und alternativ zum bordeigenen ADC im Bereich von 0 bis 40MHz betrieben werden. Außer dem Frequenzvorteiler VT, der PLL-Schaltung, dem Pulseinheitenzähler PZ und der funktionalen Torschaltung FG sind auch die 32 Amplitudensteller SDAC mit auf der Platine angeordnet, um jeden der Laufzeitkettenausgänge einer unabhängigen, frei programmierbaren Amplitudengewichtung unterziehen zu können. Da der Richtungsbildner sowohl für analoge Wandler-Endstufen als auch für ternär schaltende Brücken-Endstufen ausgelegt sein kann, läßt sich der gesamte Generatorkern vom analogen wortparallelen 9 Bit-Modus in einen 2 Bit Ternärmodus umschalten. Ein Steuerwerk übernimmt auch in dieser Betriebsweise alle Kontrollfunktionen, so daß im Ternärmodus die vierfache maximale Pulstiefe $4 \times P_{max}$ realisiert werden kann.

Fig.11 zeigt etwa in Originalgröße einen Funktionsgenerator gemäß Fig. 9 mit den Baugruppen

D1:     FIFO-Speicher
D2:     Steuerwerk mit PZ, FG, VT, SDAC
D3:     programmierbare PLL
C1:     Pufferkondensator der Stromversorgung
U1:     MDAC
G1:     Oszillator FOSZ

Er hat die Abmessungen eines Steckplatine (Dongle) und besteht aus minimal 2 und maximal 5 aktiven Chips. Die Speichertiefe $P_{max}$ beträgt je nach Bestückung 64 bis 32768 Speicherpositionen (32K-FIFO), welche in 2er-Potenzschritten pinkompatibel bestückbar sind. Als Systemfrequenz kann beispielsweise jeder Standard-Oszillator im 8DIL300 oder 14DIL300-Gehäuse bis zur maximalen Taktfrequenz FOSZ von 66 MHz eingesetzt werden. Ist die PLL-Schaltung vorgesehen, so muß die Mutter-Taktfrequenz FOSZ zwischen 2MHz und 32MHz liegen. Bei Verwendung einer 32K-Speicherstruktur sind Frequenzen im Bereich von FCLK/32768 bis FCLK/2 möglich. Man kann also bereits ohne Variation der PLL-Ausgangsfrequenz und ohne programmierbaren Frequenzvorteiler einen Frequenzbereich von 1g[32768/2] = 4,21, also mehr als 4 Zehnerpotenzen überdecken. Somit lassen sich auch Sinussignale mit kleinem Klirrfaktor bis in den MHz-Bereich erzeugen. Die Schaltungsausgänge DC-OUT und AC-OUT können direkt niederohmige Lasten bei einer Ausgangsimpedanz von 160$\Omega$ treiben bzw. hochohmig (5k$\Omega$) ausgekoppelt eine nachfolgende Verstärkerstufe ansteuern. TP-OUT stellt ein tiefpaßgeglättetes Ausgangssignal zur Verfügung, wobei die Grenzfrequenz sowie die Ausgangsamplitude zusätzlich mit jeweils 8 Bit programmiert werden können. SYNC-OUT liefert die wahlfrei progammierbare Synchronisationsfunktion in Form von 0/1-Sequenzen entsprechend 0V/5V.

Die im Anspruch 19 und den Folgeansprüchen beschriebene Weiterbildung der Erfindung kombiniert den bislang erörterten Funktionsgenerator mit einer abgewandelten Ausführungsform des in der älteren deutschen Patentanmeldung DE 196 32 553 A1 beschriebenen Sendegenerators, in dem ein programmierbarer Lesespeicher PROM oder EPROM als Zustandsmaschine arbeitet. Der FIFO-Generator erzeugt die HF-Mischfrequenz FHF von beispielsweise 483kHz und der PROM-Generator die NF-Sendefunktion FNF mit beispielsweise 28kHz, so daß sieh eine Zwischenfrequenz von 455kHz ergibt.

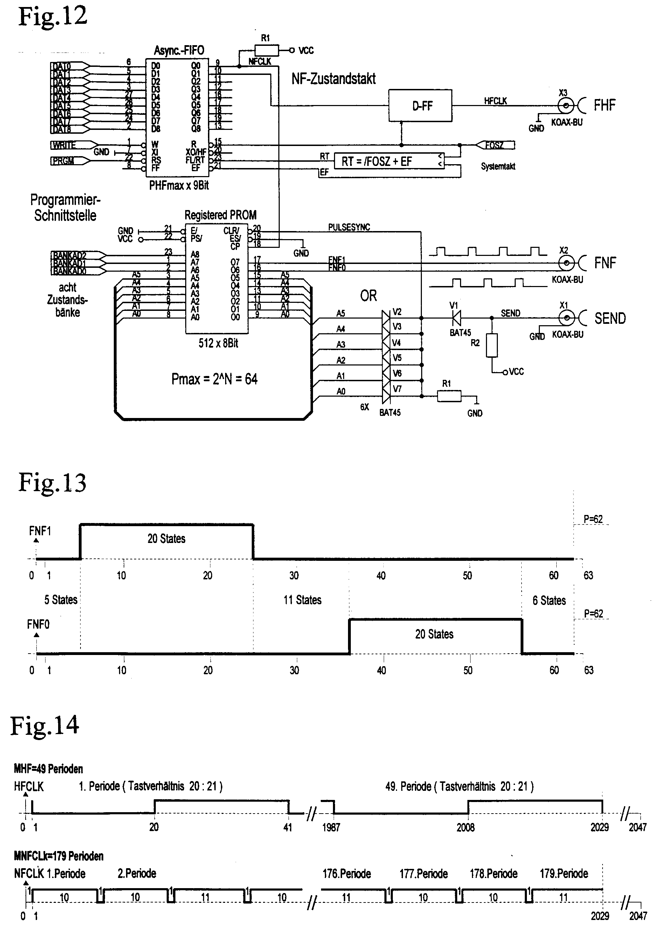

Im oberen Teil von Fig.1 ist der die Mischfrequenz FHF erzeugende FIFO-Generator und im unteren Teil der die Sen2deimpulsfolge FNF liefernde PROM-Generator dargestellt. Wie Fig13 zeigt, hat das FNF-Sendesignal nur drei Signalzustände: FNF1 = 1/FNF0 = 0, FNF1 = FNF0 = 0 und FNF1 = 0/FNF0 = 1. Zur Einhaltung der in DE 196 32 553 A1 erörterten Bijektivitätsforderung werden N eigenständige Zustandsbits benutzt, um die PROM-Zustandsmaschine beispielsweise in Form eines monoton aufsteigenden Zählers zu realisieren. Byte-orientierte (1 Byte = 8 Bit) Speicher sind preisgünstig verfügbar, so daß man mit N = 6 Bit eine Zustandsmaschine mit einer Funktionssequenzlänge PNF von PNF $\leq$ PNF$_{max}$ = 64 Zuständen programmieren kann. Die restlichen 2 Bits des Datenbytes können vier frei programmierbare Zustände enthalten, so daß darin die drei möglichen Zustände des wie oben erwähnt ternär kodierten Sendesignals abgelegt werden können.

Die Zustandsmaschine PROM (registered PROM) in Fig. 12 ist ein von einem Systemtakt NFCLK am Pin 18 getakteter programmierbarer Lesespeicher PROM oder EPROM, dessen Datenausgänge O0....O5 parallel an die Adreßeingänge A0....A5 zurückgeführt sind. Die Datenausgänge O6 und O7 liefern die beiden hier gegeneinander um 180° phasenversetzt programmierten Sendesignale FNF0 und FNF1. Den Betriebstakt NFCLK liefert der FIFO-Generator D1 an seinem Port Q0. Dem Port CLR des PROM wird ein Startsignal PULSESYNC zugeführt, sobald am am Starteingang SEND des Signalgenerators ein nicht dargestellter Sendeimpuls-Auslöseschalter die Erzeugung eines Sendeimpulses verlangt.

Verwendet man, wie in Fig. 12 angedeutet, anstelle eines minimal notwendigen 64 x 8 Bit Registered PROM eine größere byteorientierte PROM-Speicherstruktur, so kann man das PROM auf die Funktion mehrerer unterschiedlicher Zustandsmaschinen und damit aufverschiedene Sendefrequenzen vorprogrammieren. Die entsprechenden Stützwerte werden in diesem Fall in verschiedene Funktionsbänke des PROM eingespeichert und können durch Anwählen einer der Funktionsbänke aktiviert werden. Hierzu legt man an die verbleibenden Adreßeingänge A6 bis A8 des PROM entsprechende Funktionsbank-Auswahlsignale BANKAD 0, BANKAD 1 und BANKAD 2. Für M parallele Funktionsbänke müssen zusätzlich zu den 6 Adreßbits weitere 1d[M] (Logarithmus dualis) Adreßbits verfügbar sein. In Fig. 12 sind mit drei Bankadreßbits, d.h. 1d[M] = 3, somit M = $2^3$ = 8 vorprogrammierte Zustandsbänke anwählbar.

Die Frequenz des Sendesignals FNF, das in der Regel in Form einer einzigen Signalperiode über die jeweils aktive Zustandstiefe PNF des PROM programmiert ist, hängt bei fester Zustandstiefe PNF allein vom Betriebstakt NFCLK ab, welcher somit für unterschiedliche Sendefrequenzen verschieden sein muß. Bei vorgegebener PNF können aufgrund von Realisierungsbeschränkungen für den Betriebstakt NFCLK im nachfolgend zu beschreibenden FIFO-Generator möglicherweise nur unzureichend fein aufgelöste Sendefrequenzen erzeugt werden. Deshalb sind in Fig. 12 als Weiterbildung der Erfindung mehrere Zustandsblöcke mit unterschiedlichen, teilerfremden Zustandstiefen PNF(BANKAD)$\leq$ PNF$_{max}$ vorgesehen, wobei jeweils diejenige PNF(BANKAD ) mit der geringsten Abweichung von der gewünschten Soll-Sendefrequenz an A6 bis A8 ausgewählt und der zugehörige Betriebstakt NFCLK aktiviert wird. Ein später noch zu beschreibender Optimierungsalgorithmus bestimmt die jeweils optimale Kombination aus einer der fest vorprogrammierten Zustandsbänke und einer der arbiträr programmierbaren Bitsequenzen NFCLK im FIFO-Generator.

Das Hardware-ODER-Gatter OR in Fig. 12, bestehend aus den Dioden V1...V7 und dem Widerstand R10, bewirkt einen wohldefinierten Sendeimpulsabschluß (funktionales Gating), ohne eine gerade ablaufende Sendeperiode bei Deaktivierung des Sendeimpuls-Auslöseschalters, d.h. beim Verschwinden des Auslösesignals SEND und damit des Startsignals PULSESYNC am Port CLR zu unterbrechen.

Die Datenbits A5...A0 realisieren die Zustandsmaschine mit PNF$_{max}$ = 64, die anderen beiden Datenbits FNF1 und FNF0 kodieren das eigentliche Sendesignal zur Ansteuerung schaltender Brückenendstufen. Dabei steuert das Signal "1" einen der beiden diagonalen Brückenzweige durch. Beide gemeinsam dürfen nicht aktiviert sein. Eine Übergangstotzeit zwischen den Aktivierungszuständen ermöglicht einen Abbau der in der Brückenschaltung und im Ultraschall-Wandler kapazitiv gespeicherten Energie. Abhängig von der Sendefrequenz und vom Abklingverhalten der die Brücke bildenden Halbleiterschalter (z.B. MOSFETs) wird die Totzeit entsprechend bemessen. Mit einer Variation des Puls/Pausen-Verhältnisses läßt sich die effektive Sendeleistung in Grenzen variieren sowie der Klirrgrad minimieren. Aktiv- und Totzeiten lassen sieh bankabhängig vorgeben, so daß die Puls/Pausen-Verhältnisse bei konstanter Sendefrequenz in Einheiten der NFCLK-Taktperiode frei vorgebbar sind. Beim in Fig. 13 gezeigten Ausführungsbeispiel besteht eine Signalperiode aus 62 Signal-Zeiteinheiten, von denen 2 x 20 aktive Einheiten und 2 x 11 Totzeiten sind.

Bei dem im oberen Teil von Fig. 12 dargestellten arbiträren HF-Generator hat der FIFO-Speicher eine der Signalfunktions-Sequenzlänge entsprechende Stützstellentiefe PHF und erzeugt zwei binäre Bitsequenzen identischer Stützstelltiefe PHF. Das im Hauptpatent ausführlich beschriebene Grundprinzip dieses Funktionsgenerators besteht in der Ausnutzung des FIFO-typischen EMPTY-Signals am Ausgang EF zur Erzeugung eines RETRANSMIT-signals am Port RT, wodurch diese FIFO-Struktur die letzte Datenauslesesequenz automatisch wiederholt. Wegen der parallelen FIFO-Struktur mit 9 Bits weisen die beiden Bitsequenzen NFCLK am Port Q0 und HFCLK am Port Q1 die gleiche Stützstellentiefe PHF auf, welche durch die verfügbare Speichertiefe PHF$_{max}$ begrenzt wird. Die zur Sendefrequenz FNF gehörige Mischfrequenz FHF = FZF + FNF für eine konstante Mischprodukt- oder Zwischenfrequenz FZF (von beispielsweise 455 kHz für keramische Filter) steht am Port Q1 als digitale Bitsequenz, mit welcher direkt ein digitaler Mischer angesteuert werden kann. Das D-FlipFlop D-FF sorgt während der Auslesepausen für konstante Bedingungen.

Die Mischfrequenz FHF soll aus einem Muttertakt FOSZ von beispielsweise 20MHz möglichst genau abgeleitet werden. Bei ausreichend verfügbarer Speichertiefe $PHF_{max}$ des FIFO-Speichers und einem geeigneten Muttertakt FOSZ für alle im System zu erzeugenden NF/HF-Frequenzen kann man in weiterer Ausgestaltung der Erfindung anstatt einer einzigen FHF-Periode mehrere, und zwar möglichst viele MHF-Perioden in den FIFO-Generator programmieren. Damit reduziert man bei ungeraden Teilerverhältnissen FOSZ/FHF den unvermeidbaren Frequenzfehler erheblich. Man wählt die Anzahl MHF der einprogrammierten HF-Perioden als bei vorgegebener Speichertiefe maximal eingebbare Anzahl von HF-Perioden und erzielt hierdurch bei vorgegebenem FOSZ und $PHF_{max}$ die minimal errreichbare Frequenzabweichung.

Der auf diese Weise an Q0 erzeugte NF-Betriebstakt NFCLK braucht nicht verriegelt (gelatcht) zu werden, wenn man die LDW-Phasen nur durch einen einzigen Zustand (für eine einzige Speicherstelle) wiedergibt. Die inaktiven Phasen werden durch den Pull-Up-Widerstand R1 automatisch "1"-aktiv. Die sich ergebende Asymmetrie des Signals NFCLK ist unerheblich, weil die PROM-basierende Zustandsmaschine nur durch den 0 =>1 Ubergang getaktet wird. Das Ausgangssignal FNF ist wieder völlig symmetrisch.

Durch die Vorgabe der Anzahl von Stützstellen (siehe Gleichung 15) ensteht immer dann ein Realisierungsproblem, wenn das Signal NFCLK nicht mit ganzzahliger Periode in die PHF Stützstellen paßt. Abhilfe schafft hier die Wahl eines mittleren NFCLK, der durch ganzzahlige Periodenverhältnisse oberhalb und unterhalb des ungeradzahligen Quotienten erzeugt wird. Die eigentlich gewünschte Nominalfrequenz NFCLK wird also durch die nächst höhere und die nächst kleinere "ganzzahlige" NFCLK realisiert, wobei sich die relativen Anteile nach dem Nachkommaanteil des gebrochenen Quotienten richten. Die mittlere Schwankung (Jitter) um die Nominalfrequenz NFCLK ist bei einem Quotienten mit 0,5 Fractionanteil am größten. Um diesen Jitter möglichst klein zu halten, kann man eine Optimierung über alle zur Verfügung stehenden NF-PROM-Bänke mit ihren zugehörigen aktuellen Zustandsanzahlen $PNF_i$ (für die i-te PROM-Bank) hinsichtlich der für die gewünschte Sendefrequenz FNF notwendigen Betriebstaktraten $NFCLK = PNF_i \times FNF$ durchführen, um diejenige Anzahl der notwendigen NFCLK-Perioden bei vorgegebenem PHF zu ermitteln, welche betragsmäßig die kleinste Abweichung zu den benachbarten Ganzzahlen (Integer) hat. Die mathematischen Ableitungen werden später anhand der Gleichungen 13 und 14 beschrieben.

Ein einfaches Beispiel zeigt Fig. 14 wie folgt:

FOZ = 20 MHz          $PNF_{max}$ = 64          $PHF_{max}$ = 2048

verfügbar: 8 PROM-Bänke mit $PNF_i$ = 64; 63; 61; 60; 32, 16, 15, 14

Sollwerte: FNF = 28,0 kHz, FHF=483,0 kHz
MHF = 49 Perioden in PHF = 2029 Signaleinheiten für optimale Ausnutzung,

ergibt Istwert: FHF = (MHF x FOSC)/PHF = 482,996 kHz

NFCLK = 179 L/H-Flanken in 2029 Signaleinheiten mit der Zustandsmaschine mit PNF = 63

ergibt Istwert: FNF = (NFCLK x FOSZ)/(PHF x PNF) = 28,0066 kHz.

Die erzeugte Sendefrequenz FNF weicht also nur um 6,6 Hz vom Sollwert 28 kHz ab und die erzeugte Mischfrequenz FHF um 4 Hz von ihrem Sollwert 483 kHz. Wegen der phasenstarren Verknüpfung beider Frequenzen ändern sich diese im Falle einer Frequenzdrift des Mutteroszillators in der gleichen Richtung, so daß jegliche Schwankung der Zwischenfrequenz um deren Sollwert 455 kHz noch geringer ausfällt. Die Programmierung des FIFO-Generators und der PROM-Zustandsmaschine erfolgt in der oben bzw. in DE 196 32 553 A1 beschriebenen Weise. Ein beliebiger Systemprozessor, von dem auch der Muttertakt FOSZ abgeleitet werden kann, sorgt für die Parameteroptimierung bezüglich PHF, PNF und NFCLK und schreibt über eine Programmierschnittstelle die entsprechenden Signale in den FIFO-Speicher.

Aus dem Muttertakt FOSZ erzeugt der FIFO-basierende arbiträre Funktionsgenerator zum einen die zur Sendefrequenz FNF gehörige Mischfrequenz FHF und andererseits den Betriebstakt NFCLK für die PROM-basierende Zustandsmaschine, welche die NF-Sendeimpulsfolge FNF liefert. Während der "1"- Phase des Sendetriggersignals SEND gibt der kombinierte NF/HF-Generator gemäß Fig.12 das NF-Pulspaket am Ausgang FNF ab und schließt dieses wohldefiniert ab (funktionales gating). Die HF-Mischfrequenz FHF hingegen steht ständig am Ausgang FHF zur Verfügung, um die eintreffenden Echosignale, d.h. laufzeitverzögerte Sendesignale, durch Überlagerung in ein vorgegebenes Zwischenfrequenzband FZF zu überführen.

Nachfolgend werden die mathematischen Zusammenhänge für die Berechnung und Optimierung des kombinierten Generators erläutert.

FOSZ:     Muttertakt

FNF:     gewünschte Sendefrequenz;

$$\text{real: } FNF = \frac{FOSZ*NFCLK}{PHF*PNF} \tag{5}$$

FZF:     Empfänger-Zwischenfrequenz für keramische Filter

FHF:     notwendige Mischerfrequenz für Empfänger

$$\text{ideal: } FHF = FZF + FNF \tag{6}$$

$$\text{real: } FHF = \frac{FOSZ*MHF}{PHF} \tag{7}$$

PNF:     aktuelle Zustandstiefe für die Realisierung einer Sendefunktion FNF. Diese Zustandstiefen sind im NF-Zustandsmaschinen-PROM fest vorprogrammiert und können abhängig von der jeweiligen Bank verschieden sein ( $PNF_i$ = 1....64). Für eine interaktive Programmierung des Signalgenerators auf irgendeine neue Sendefrequenz FNF sind $PNF_i$ bereits fest implementiert. Zur Dimensionierung des PROM-basierenden FNF-Generators selbst muß man Gleichung (4) heranziehen:

$$PNF = INT \left\lceil \frac{NFCLK}{FNF} \right\rceil \tag{8}$$

INFCLK:     idealer Betriebstakt einer FNF-Zustandsmaschine

$$INFCLK = FNF * PNF \tag{9}$$

NFCLK:     Der ideal berechnete INFCLK für die FNF-Zustandsmaschine stellt die korrekte Taktfrequenz für den NF-Sendegenerator dar. Da diese jedoch parallel zur FHF im FIFO-Generator erzeugt wird, muß mit der dortigen Zustandstiefe PHF der Betriebstakt NFCLK realisiert werden.

$$\frac{PHF}{FOSZ} \tag{10}$$

beschreibt eine FIFO-Durchlaufzeit des HF-Generators, d.h. die Zeit in der die Zustandstiefe PHF mit FOSZ abgearbeitet wird.

$$\frac{1}{INFCLK} \tag{11}$$

ist eine Taktperiode, mit der die PNF-Zustandsmaschine idealerweise die gewünschte FNF erzeugt. Diese Taktperiode muß im HF-Generator parallel erzeugt werden, wobei dort genau diese realisierten PHF benutzt werden müssen. Der Quotient der beiden

$$\text{Terme } \frac{PHF*INFCLK}{FOSZ} \tag{12}$$

gibt(gebrochen) an, wieviele 1=> 0=>1 Übergänge durch den Betriebstakt NFCLK innerhalb der Speichertiefe PHF zu realisieren sind. Real ist nur ein ganzzahliger NFCLK möglich, weshalb der Fractalanteil

EP 0 887 928 A2

$$FRC\left[\frac{PHF*INFCLK}{FOSZ}\right] \tag{13}$$

minimiert werden muß, wenn die Frequenzabweichung möglichst gering sein soll. Ist dies durch Wahl einer geeigneten PNF gewährleistet, so wird

$$NFCLK = RND\left[\frac{PHF*INFCLK}{FOSZ}\right], \tag{14}$$

wobei der RND-Operator die Rundungsoperation beschreibt.

Dies gibt ganzzahlig an, wieviele 1=>0=>1 Übergänge in PHF Zuständen vorhanden sein müssen. Im allgemeinen sind NFCLK und PHF nicht ganzzahlige Teiler voneinander, so daß die notwendige Anzahl der Übergänge optimal um die Solltaktrate gewählt wird. Der verbleibende Fehler gegenüber der idealen INFLCK wird umso geringer, je kleiner der Fractal-Anteil von NFCLK vor der Rundungsoperation RND ist. Zum Minimieren können verschiedene PNF-Zustandstiefen benutzt werden. Bei geeigneter Dimensionierung der verschiedenen $PNF_i$ -Zustandstiefen existieren immer Zustandstiefen für einen minimalen Fractal-Anteil der NFCLK-Erzeugung.

PHF: aktuelle Zustandstiefe der zu FNF gehörigen Mischfrequenz FHF. Wie oben bereits erwähnt, bezieht sich PHF nicht notwendigerweise auf eine HF-Periode. Im allgemeinen werden vielmehr möglichst viele HF-Perioden in den $PHF_{max}$ = 2048 Zuständen abgebildet, um die Auflösung und damit die Frequenzgenauigkeit zu maximieren. PHF beinhaltet dann für die gesamte HF-Zustandstiefe MHF ganze Perioden.

$$PHF=RND\left[\frac{FOSZ}{FHF}*MHF\right] \tag{15}$$

MHF: Anzahl der eingeschriebenen ganzen Perioden innerhalb der PHF-Zustandstiefe für eine vorgegebene FHF mit

$$MHF = INT\left[\frac{PHFMAX}{FOSZ}*FHF\right], \tag{16}$$

wobei der INT-Operator die Integeroperation (Vorkomma-Anteil ohne Rundung) beschreibt.

Der in Fig.12 dargestellte kombinierte Signalgenerator wird durch einen Systemprozessor über die Programmierschnittstelle konfiguriert, wobei die geeignete NF-PROM-Bank durch Anlegen statischer Bankadressen ausgewählt wird. Das Prozessorsystem muß hierfür zusätzlich zum byteparallelen Programmier-Bus mehrere statische Port-Bits zur Verfügung stellen. Zur Minimierung des Schaltungsaufwands wird die aktuelle Bankadresse der NF-Zustandsmaschine parallel zu den beiden Bitsequenzen NFCLK(Bit0) und HFCLK(Bit1) in die noch freien FIFO-Bits (2...4) programmiert. Man erhält dann eine einzige bytyorientierte Programmierschnittstelle, welche auch nur eine einzige Programmieradresse belegt und somit in jedes Prozessorsystem integriert werden kann.

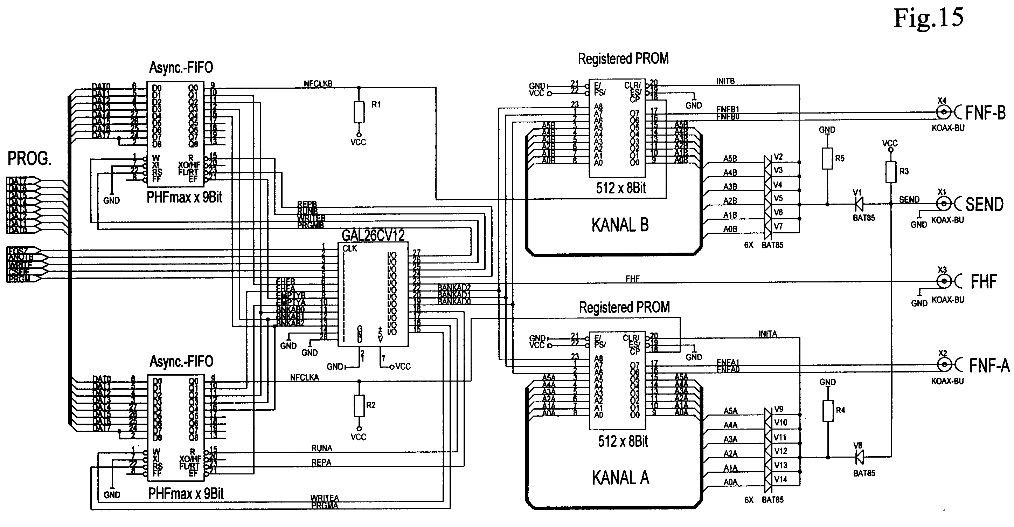

Fig.15 zeigt einen solchen kombinierten Signalgenerator für ein auf zwei verschiedene und frei definierbare Lotfrequenzen FNFA und FNFB umschaltbares Echolotgerät. Er hat hierfür zwei wahlweise einschaltbare Kanäle A und B, deren Aufbau im wesentlichen der Schaltung nach Fig.12 entspricht. Mit der in Fig.15 dargestellten Schaltung kann, sofern erwünscht, in aufeinanderfolgenden Lotperioden sogar abwechselnd die eine bzw. die andere Sendefrequenz erzeugt werden. Die Kanalselektion erfolgt dabei durch das Kanalwechselsignal ANOTB am Pin 2 eines hier zusätzlich zur bisher beschriebenen Schaltung vorgesehenen programmierbaren Logikbausteins GAL (Generic-Array-Logik), beispielsweise vom Typ GAL26CV12 der Fa.Lattice. Der einmalig programmierte kombinierte NF/HF-Generator arbeitet danach völlig eigenständig, wobei der Sendeimpuls jeweils durch das SEND-Signal aktiviert und durch das beschriebene funktionale Gating der NF-PROM-Zustandsmaschine funktional definiert beendet wird. Je nach Wahl des Kanals A oder B wird die zur Sendefrequenz FNFA oder FNFB passende Mischfrequenz für den Empfänger automatisch am Ausgang FHF zur Verfügung gestellt, um das empfangene Echosignal in das konstante ZF-Band von beispielsweise 455kHz umzusetzen.

Durch einen speziellen, im Logikbaustein GAL realisierten Zugriffsmechanismus für den Prozessor auf die Schaltung wird es möglich, den kombinierten Sendefunktionsgenerator jederzeit auch im Betrieb ohne Unterbrechung umzukonfigurieren. Dabei wird der gerade nicht aktive Kanal über den Programmierport frei umprogrammiert, auch wenn der andere Kanal gerade sendet oder im Empfangsbetrieb die zugehörige Mischfrequenz FHF erzeugt. Der Baustein GAL beinhaltet zugleich die logischen Funktionen für die zyklische EMPTY/RETRANSMIT-Signalrückführung des FIFO-Speichers, das Verriegeln (Latchen) des jeweils aktiven FIFOs (FHFA bzw. FHFB) sowie das Speichern der aktuellen Bankadresse für die gerade aktive PROM-Zustandsmaschine aus dem zugehörigen FIFO-Generator. Diese Bankadresse wird beim Programmieren parallel zu den Bitsequenzen für NFCLK (Bit0) und FHF (Bit1) in die Bits DAT(4...2) konstant eingeschrieben. Anwendungen, bei denen während des laufenden Betriebs eines FIFO-Generators zwischen verschiedenen Bänken umgeschaltet wird, sind ebenfalls möglich. Mit der in Fig.15 angegebenen Bestückung lassen sich bei einem Systemtakt FOSZ = 20MHz und einer Zwischenfrequenz von FZF = 455kHz beispielsweise acht NF/HF-Paare von 28/483, 30/485, 33/488, 38/493, 50/505, 100/555, 200/655 und 210/665 kHz erzeugen. Als FIFO-Speicher eignet sieh beispielsweise der Baustein CY7C429 und als PROM-Speicher der Baustein CY7C225A der Fa. Cypress. FIFO-Speicher sind derzeit bis zu einer Speichertiefe von $PHF_{max} \leq 65536$ verfügbar.

**Patentansprüche**

1. Elektronischer Funktionsgenerator, dadurch gekennzeichnet, daß eine Periode (P) der zu erzeugenden Funktion in Form mehrerer Stützwerte in einen asynchronen FIFO-Speicher (D1) programmiert ist, dessen Retransmit-Eingang (RT) das am Ende des Auslesens auftretende Signal (EF) vom Empty-Ausgang des Speichers zugeführt wird.

2. Generator nach Anspruch 1, dadurch gekennzeichnet, daß dem Retransmit-Eingang (RT) zusätzlich eine das Fortschalten des Speichers steuernde Taktfrequenz (FOSZ) zugeführt wird.

3. Generator nach Anspruch 2, gekennzeichnet durch eine Torschaltung (FG) zur Verknüpfung von Taktfrequenz und einem verriegelten Empty-Signal derart, daß erst nach Ausgabe des letzten (P-ten) gespeicherten Datenworts das verriegelte Empty-Signal an den Retransmit-Eingang (RT) durchgeschaltet wird.

4. Generator nach Anspruch 3, dadurch gekennzeichnet, daß das zuletzt ausgelesene Datchwort zwischengespeichert und das Empty-Signal beim Auftreten des nächsten Taktimpulses an den Retransmit-Eingang (RT) durchgeschaltet wird.

5. Generator nach einem der Ansprüche 1 bis 4, dadurch gekennzeichnet, daß an die Datenausgänge (Q0 bis Q8) des FIFO-Speichers (D1) ein mit der gleichen Taktfrequenz gesteuertes Mehrfach-Flip-Flop (D2) mit einer der Anzahl der Datenausgänge entspechenden Anzahl von Stufen angeschlossen ist.

6. Generator nach einem der Ansprüche 1 bis 4, dadurch gekennzeichnet, daß zum Erzeugen analoger Ausgangssignale an die Datenausgänge (Q0 bis Q8) des FIFO-Speichers (D1) ein R2R-Kettenleiternetzwerk angeschlossen ist.

7. Generator nach einem der Ansprüche 1 bis 4, dadurch gekennzeichnet, daß zum Erzeugen analoger Ausgangssignale an die Datenausgänge (Q0 bis Q8) des FIFO-Speichers (D1) ein von der gleichen Taktfrequenz gesteuerter D/A-Umsetzer (DAC) angeschlossen ist.

8. Generator nach einem der Ansprüche 1 bis 7, dadurch gekennzeichnet, daß die Taktfrequenz mit FOSZ fest vorgegeben ist.

9. Generator nach Anspruch 8, dadurch gekennzeichnet, daß dem Taktgeber (FOSZ) eine programmierbare Phasenverriegelungs-Schaltung (PLL) nachgesehaltet ist.

10. Generator nach Anspruch 9, dadurch gekennzeichnet, daß zwischen die PLL-Schaltung und den Betriebstaktanschluß (FCLK) ein programmierbarer Frequenzteiler (VT) eingeschaltet ist.

11. Generator nach Anspruch 9 oder 10, gekennzeichnet durch eine funktionale Torschaltung (FG), die mit Eingängen an den Empty-Ausgang (EF) des FIFO-Speichers (D1), den Taktgeber und eine Triggersignalquelle (R/S) angeschlossen ist und einen Ausgang (FCLK) als Systemtakt des Generators hat.

12. Generator nach Anspruch 11, gekennzeichnet durch einen programmierbaren Pulsgruppenzähler (PZ), der eingangsseitig an das Empty-Signal (EF) sowie die Dateneingänge des FIFO-Speichers (D1) angeschlossen und ausgangsseitig mit der funktionellen Torschaltung (FG) verbunden hat.

13. Generator nach einem der Ansprüche 7 bis 12, gekennzeichnet durch einen programmierbaren Amplitudensteller (SDAC), der eingangsseitig an die Dateneingänge des FIFO-Speichers (D1) und gegebenenfalls an den Pulsgruppenzähler (PZ) und/oder die PLL-Schaltung angeschlossen ist während sein Ausgang mit einem Bezugssignaleingang (REF) des als multiplizierender D/A-Umsetzer (MDAC) ausgebildeten D/A-Umsetzers in Verbindung steht.

14. Generator nach Anspruch 13, dadurch gekennzeichnet, daß der Amplitudensteller ein programmierbarer D/A-Umsetzer (SDAC) ist.

15. Generator nach Anspruch 13 oder 14, dadurch gekennzeichnet, daß der Bezugsspannungseingang (REF) des multiplizierenden D/A-Umsetzers (MDAC) an eine externe Bezugssignalquelle (XREF) anschließbar ist.

16. Generator nach einem der vorangehenden Ansprüche, dadurch gekennzeichnet, daß an die Ausgänge des FIFO-Speichers (D1) eine Bank paralleler D/A-Umsetzer (DAC 00 bis DAC31) angeschlossen ist, welche die Wandler einer Ultraschall-Sendeanlage speisen.

17. Generator nach Anspruch 16, dadurch gekennzeichnet, daß zwischen die FIFO-Ausgänge und die D/A-Umsetzer der Umsetzerbank je eine digitale Verzögerungsschalteung (VS) eingeschaltet ist.

18. Generator nach einem der Ansprüche 9 bis 17, dadurch gekennzeichnet, daß zusätzlich ein 1 Bit-Synchronisationsausgang (SYNC) vorhanden ist, wobei die Funktionsquantisierung auf (N-1) Bit reduziert ist.

19. Generator nach einem der Ansprüche 1 bis 5 zur Verwendung als Signalgenerator für Rückstrahl-Ortungsgeräte, insbesondere Echolotgeräte, bei dem wenigstens eine Periode (P) eines HF-Signals in Form mehrerer Stützwerte (PHF) in den FIFO-Speicher einprogrammiert ist,
   **dadurch gekennzeichnet**, daß

   a) der HF-Generator (FIFO) einerseits ein Mischfrequenzsignal (FHF) zum Umsetzen der Trägerfrequenz (FNF) der empfangenen Echoimpulse in eine vorgegebene Zwischenfrequenz (FZF) und andererseits den NF-Betriebstakt (NFCLK) für einen die Sendeimpulse (FNF1, FNF0) erzeugenden Sendeimpulsgenerator (PROM) liefert;
   b) der Sendeimpulsgenerator ein vom genannten Betriebstakt (NFCLK) sychron getakteter, rückgekoppelter und als Zustandsmaschine arbeitender Lesespeicher (PROM) ist, bei dem mehrere (O0...O5) der Datenausgänge (O0....O7) parallel an Adreßeingänge (A0----A5) des Lesespeichers zurückgeführt sind und wenigstens ein weiterer Datenausgang (O6, O7) das Sendeimpulssignal (FNF1, FNF0) liefert; und
   c) ein Mehrfach-ODER-Gatter (V1...V7) mit einem ersten Eingang (V1) an einen Sendeimpuls-Auslöseschalter (X1), mit mehreren zweiten Eingängen (A0...A5) an die Adreßeingänge (A0...A5) des Lesespeichers (PROM) und mit seinem Ausgang (PULSESYNC) an den Initialisierungseingang (CLR) des Lesespeichers angeschlossen ist.

20. Generator nach Anspruch 19, dadurch gekennzeichnet, daß die Zustandsmaschine (PROM) des Sendimpulsgeneratores an zwei weiteren Datenausgängen (O6, O7) zwei, beispielsweise um 180° phasenversetzte Sendeimpulssignale (FNF1, FNF0) zum Ansteuern einer einen Sendewandler speisenden Brücken-Endstufe liefert.

21. Generator nach Anspruch 19 oder 20, gekennzeichnet durch wenigstens eine weitere, eine zweite Sendeimpulsfolge (FNFB1, FNFB0) erzeugende Zustandsmaschine (PROMB) sowie wenigstens einen weiteren, einen zweiten Betriebstakt (NFCLKB) erzeugenden HF-Generator (FIFOB) und eine Kanalumschaltlogik (GAL), welche an einem Kanalwahleingang (ANOTB) ein Kanalauswahlsignal (ANOTB) empfängt.

22. Generator nach Anspruch 21, dadurch gekennzeichnet, daß die Kanalumschaltlogik (GAL) an einem weiteren Eingang (CLK) von einem Systemtaktgeber den Muttertakt (FOSZ) empfängt und diesen als Taktsignal (RUNA; RUNB) dem Takteingang ($\overline{R}$) des jeweils aktiven FIFO-Generators (FIFOA, FIFOB) zuleitet.

23. Generator nach einem der Ansprüche 19 bis 22, dadurch gekennzeichnet, daß als Zustandsmaschine (PROM) eine byte-orientierte PROM-speicherstruktur mit mehreren (z.B.8) auswahlbaren Funktionsbänken vorgegebener maximaler Speichertiefe ($PFN_{max}$) dient und mehrere der Funktionsauswahl dienende Funktionsbank-Auswahleingänge (BANKAD0...2) vorgesehen sind.

24. Generator nach Anspruch 23, dadurch gekennzeichnet, daß die effektiv genutzte Speichertiefe (PNF) der Zustandsmaschine (PROM) frei wählbar ist.

25. Generator nach einem der Ansprüche 19 bis 24, dadurch gekennzeichnet, daß die effektiv genutzte Speichertiefe (PHF) des FIFO-Speichers frei wählbar ist.

26. Generator nach Anspruch 24 und 25, gekennzeichnet durch eine solche Bemessung der effektiven Speichertiefen (PNF, PHF) beider Speicher, daß die Frequenzabweichungen der erzeugten Mischfrequenz (FHF) und der Sendefrequenz (FNF) von den Sollwerten auf ein Minimum optimiert sind.

27. Generator nach einem der Ansprüche 24 bis 26, dadurch gekennzeichnet, daß die maximale Speichertiefe ($PNF_{max}$) des PROM-Speichers $PNF_{max} = 64$ und die maximale Speichertiefe (PHFmax) des FIFO-Speichers beispielsweise $PHF_{max} = 2048$ beträgt.

28. Generator nach einem der Ansprüche 19 bis 27, dadurch gekennzeichnet, daß in die verfügbare Speichertiefe ($PHF_{max}$) des FIFO-Speichers mehrere HF-Perioden (FHF), vorzugsweise möglichst viele, eingespeichert sind.

# Programmier-Schnittstelle

**D1**      **D2**

Async.-FIFO

| Pin | Signal | | Signal | Pin |
|---|---|---|---|---|
| 6 | DAT0 → D0 | | Q0 | 9 |
| 5 | DAT1 → D1 | | Q1 | 10 |
| 4 | DAT2 → D2 | | Q2 | 11 |
| 3 | DAT3 → D3 | | Q3 | 12 |
| 27 | DAT4 → D4 | | Q4 | 16 |
| 26 | DAT5 → D5 | | Q5 | 17 |
| 25 | DAT6 → D6 | | Q6 | 18 |
| 24 | DAT7 → D7 | | Q7 | 19 |
| 2 | DAT8 → D8 | | Q8 | 13 |

D-FF × 9

N = 9 Bit Digital-Sequenz

WRITE — 1 — $\overline{W}$    $\overline{R}$ — 15

GND — 7 — XI    XO/HF — 20

PRGM — 22 — $\overline{RS}$    FL/RT — 23 — RT

8 — $\overline{FF}$    $\overline{EF}$ — 21 — EF

Pmax × 9Bit

$RT = f(FOSZ,EF)$

FOSZ

Systemtakt

**G1**

**Fig.1**

EP 0 887 928 A2

# Fig. 2a

EMPTY a)
RETRANS a) — Restzeit für 1.RD
DAT a)

1.WR | 2.WR | P-1 | P.WR
1.RD | 2.RD | P-1 | P.RD | P+1 | P+2

1. | 2. | P-1. | P. | 1.DAT | 2. | P-2 | P-1 | 1.DAT | 2.DAT | 3

# Fig. 2b

EMPTY b)
RETRANS b) — Eine Periode Retransmit
DAT b)

1. | 2. | P-1. | P. | 1.DAT | 2. | P-2 | P-1 | P.DAT | HIGHZ | 1

# Fig. 2c

EMPTY c)
RETRANS c)
DAT c)

1. | 2. | P-1. | P. | 1.DAT | 2. | P-2 | P-1 | P.DAT | 1.DAT | 2

EP 0 887 928 A2

## Programmier-
## Schnittstelle

## D1

Async.-FIFO

| | | | | |
|---|---|---|---|---|
| DAT0 | 6 | D0 | Q0 | 9 |
| DAT1 | 5 | D1 | Q1 | 10 |
| DAT2 | 4 | D2 | Q2 | 11 |
| DAT3 | 3 | D3 | Q3 | 12 |
| DAT4 | 27 | D4 | Q4 | 16 |
| DAT5 | 26 | D5 | Q5 | 17 |
| DAT6 | 25 | D6 | Q6 | 18 |
| DAT7 | 24 | D7 | Q7 | 19 |
| DAT8 | 2 | D8 | Q8 | 13 |

DAC

Analogsignal
aus  P  Stützstellen

FOUT

WRITE  1  $\overline{W}$          $\overline{R}$  15

GND ⊢  7  XI         $\overline{XO/HF}$  20

PRGM  22  $\overline{RS}$        $\overline{FL/RT}$  23

8  $\overline{FF}$          $\overline{EF}$  21

RT

$$RT = /FOSZ + EF$$

EF

FOSZ

Systemtakt

Pmax x 9Bit

G 1

EP 0 887 928 A2

Fig.3

# Programmier-
# Schnittstelle

## D1

Async.-FIFO

| Programmier-Schnittstelle | | |
|---|---|---|
| DAT0 | DAT0 6 | D0 |
| DAT1 | DAT1 5 | D1 |
| DAT2 | DAT2 4 | D2 |
| DAT3 | DAT3 3 | D3 |
| DAT4 | DAT4 27 | D4 |
| DAT5 | DAT5 26 | D5 |
| DAT6 | DAT6 25 | D6 |
| DAT7 | DAT7 24 | D7 |
| DAT8 | DAT8 2 | D8 |

Q0 9
Q1 10
Q2 11
Q3 12
Q4 16
Q5 17
Q6 18
Q7 19
Q8 13

**DAC**

Analogsignal
aus P Stützstellen

FOUT

$FCLK = FPLL / V$

WRITE 1 $\overline{W}$ $\overline{R}$ 15 FCLK

GND 7 XI XO/HF 20

PRGM 22 RS FL/RT 23 RT RT(EF,FCLK)

8 FF EF 21 EF

Pmax x 9Bit

G 1

Betriebstakt

## VT

prog. Frequenz Teiler :V

prog. PLL

FOSZ

FPLL

XOSZ

## Fig.4

EP 0 887 928 A2

## Programmier-Schnittstelle

## D1 Async.-FIFO

| | | | |
|---|---|---|---|
| DAT0 | DAT0 6 | D0 | Q0 9 |
| DAT1 | DAT1 5 | D1 | Q1 10 |
| DAT2 | DAT2 4 | D2 | Q2 11 |
| DAT3 | DAT3 3 | D3 | Q3 12 |
| DAT4 | DAT4 27 | D4 | Q4 16 |
| DAT5 | DAT5 26 | D5 | Q5 17 |
| DAT6 | DAT6 25 | D6 | Q6 18 |
| DAT7 | DAT7 24 | D7 | Q7 19 |
| DAT8 | DAT8 2 | D8 | Q8 13 |

Analogsignal

aus P Stützstellen

DAC

FOUT

WRITE    1  $\overline{W}$    $\overline{R}$  15

GND  7  XI    XO/HF  20

PRGM  22  $\overline{RS}$    FL/RT  23    RT    RT(EF,FCLK)

8  FF    EF  21    EF

FCLK

Betriebstakt
(gated)

Pmax x 9Bit

G 1

FG

EMPTY-Flag

Funktionales
Gating

FCONT(R/S,EF)

Trigger

R/S

VT

prog.
PLL

prog.
Frequenz
Teiler
:V

FPLL / V

Takt

FOSZ

FPLL

XOSZ

Fig.5

EP 0 887 928 A2

## Fig.6

## Fig.8

# Programmier-
## Schnittstelle

## D1

### Async.-FIFO

Analogsignal

aus  P  Stützstellen

| DAT0 | | DAT0 | 6 | D0 | Q0 | 9 |
| DAT1 | | DAT1 | 5 | D1 | Q1 | 10 |
| DAT2 | | DAT2 | 4 | D2 | Q2 | 11 |
| DAT3 | | DAT3 | 3 | D3 | Q3 | 12 |
| DAT4 | | DAT4 | 27 | D4 | Q4 | 16 |
| DAT5 | | DAT5 | 26 | D5 | Q5 | 17 |
| DAT6 | | DAT6 | 25 | D6 | Q6 | 18 |
| DAT7 | | DAT7 | 24 | D7 | Q7 | 19 |
| DAT8 | | DAT8 | 2 | D8 | Q8 | 13 |

**DAC**

FOUT

WRITE   1   $\overline{W}$   $\overline{R}$   15   FCLK

GND   7   XI   XO/HF   20

22   RS   FL/RT   23   RT   RT(EF,FCLK)   Betriebstakt

PRGM   8   FF   EF   21   EF   (gated)

Pmax x 9Bit

**G 1**

## PZ

prog.
Einheiten
Zähler

:M

## FG

Funktionales
Gating

FCLK(R/S,EF)

Trigger

R/S

## VT

prog.
PLL

prog.
Frequenz
Teiler

:V

FPLL / V

Takt

FOSZ

FPLL

XOSZ

Fig.7

EP 0 887 928 A2

EP 0 887 928 A2

Programmier-
Schnittstelle

Amplitudensteller

prog.
DAC

SDAC

XREF

externe
Amplitudenmodulation

D1
Async.-FIFO

MDAC

| DAT0 | 6 | D0 | Q0 | 9 |
| DAT1 | 5 | D1 | Q1 | 10 |
| DAT2 | 4 | D2 | Q2 | 11 |
| DAT3 | 3 | D3 | Q3 | 12 |
| DAT4 | 27 | D4 | Q4 | 16 |
| DAT5 | 26 | D5 | Q5 | 17 |
| DAT6 | 25 | D6 | Q6 | 18 |
| DAT7 | 24 | D7 | Q7 | 19 |
| DAT8 | 2 | D8 | Q8 | 13 |

DAT0
DAT1
DAT2
DAT3
DAT4
DAT5
DAT6
DAT7
DAT8

REF

DAC

Analogsignal
aus P Stützstellen

FOUT

WRITE
GND
PRGM

W    R    15
XI   XO/HF  20
RS   FL/RT  23
FF   EF    21

1
7
22
8

RT
EF

RT(EF,FCLK)

FCLK

Betriebstakt
(gated)

Pmax x 9Bit

G 1

PZ

prog.
Einheiten
Zähler
:M

FG

Funktionales
Gating
FCONT(R/S,EF)

Trigger

R/S

VT

prog.
PLL

prog.
Frequenz
Teiler
:V

FPLL / V

FOSZ

FPLL

XOSZ

Takt

Fig.9

Fig. 10

Fig.11

## Fig.12

Async.-FIFO

NF-Zustandtakt

D-FF    HFCLK    X3    FHF
KOAX-BU    GND

FOSZ

RT = /FOSZ + EF    Systemtakt

PHFmax x 9Bit

Programmier-Schnittstelle    Registered PROM

PULSESYNC

GND

acht Zustands-bänke

512 x 8Bit

OR    FNF1    X2    FNF
FNF0    KOAX-BU

Pmax = 2^N = 64

A5 V2
A4 V3
A3 V4    BAT45    R2    SEND    X1    SEND
A2 V5    V1    GND    KOAX-BU
A1 V6
A0 V7    R1
6X BAT45    GND    VCC

## Fig.13

FNF1    20 States    P=62
0  1    10    20    30    40    50    60  63
5 States    11 States    6 States    P=62
FNF0    20 States
0  1    10    20    30    40    50    60  63

## Fig.14

MHF=49 Perioden
HFCLK    1. Periode ( Tastverhältnis 20 : 21 )    49. Periode ( Tastverhältnis 20 : 21 )
0  1    20    41    1987    2008    2029  2047

MNFCLk=179 Perioden
NFCLK 1.Periode    2.Periode    176.Periode    177.Periode    178.Periode    179.Periode
10    10    11    10    11    10    10    11
0  1    2029    2047

Fig.15

EP 0 887 928 A2